# EUROPÄISCHE PATENTSCHRIFT

(11) **EP 0 726 629 B1**
(45) Veröffentlichungstag und Bekanntmachung des Hinweises auf die Patenterteilung: **04.08.1999**
(21) Anmeldenummer: 96101452.9
(22) Anmeldetag: 02.02.1996
(51) Int. Cl.: H02B 1/044

(54) **In einer Aufnahme einrastbarer Schalter**
Snap-in mounted switch in an opening
Interrupteur encliquetable dans une ouverture

(30) Priorität: 07.02.1995 DE 19503904
(43) Veröffentlichungstag der Anmeldung: 14.08.1996
(73) Patentinhaber: ITT Automotive Europe GmbH, 60488 Frankfurt am Main (DE)
(72) Erfinder: Preinfalk, Hans, D-74357 Bönnigheim (DE)
(74) Vertreter: Dreiss, Fuhlendorf, Steimle & Becker

(56) Entgegenhaltungen:
- DE-A- 2 827 854
- DE-A- 3 533 055
- DE-A- 4 111 025
- US-A- 3 101 922

## Beschreibung

Um die Schaltkontakte von Schaltern vor äußeren Einflüssen zu schützen, werden die Schalter vielfach in Frontplatten eingelassen. Diese Frontplatten sollen möglichst eine durchgehende Oberfläche haben, die nicht durch sichtbare Fugen oder Löcher gebildete Durchbrechungen aufweisen. Andererseits sollen die in die Frontplatte eingelassenen Schalter aber auch vergleichsweise einfach wieder lösbar sein, wobei die Mechanik zum Lösen des Schalters möglichst verdeckt angeordnet sein soll, um eine durchgehende Oberfläche zu erhalten und um gleichzeitig zu verhindern, daß das Bedienungspersonal nicht versehentlich den Schalter aus seiner Aufnahme löst. Ein Vorschlag hierzu, bei dem die Lösungsmittel erst nach Entfernen des Bedienungshebels des zugeordneten Schalters zugänglich sind, ist in der DE-A-3 533 055 beschrieben.

Die durch die dort erläuterten einstückig mit dem Gehäuse verbundenen Rasthaken stellen erhebliche Anforderungen an die Gußtechnik derartiger Gehäuse. Für den Fall, daß einer der Rasthaken bei einer Bedienung brechen sollte, muß zudem das gesamte Gehäuse ersetzt werden.

Die Erfindung geht daher aus, von einem Schalter, der sich aus dem Oberbegriff des Anspruchs 1 ergebenden Gattung. Aufgabe der Erfindung ist es, bei einem derartigen Schalter Mittel vorzuschlagen, durch welche sich das Gehäuse dieses Schalters vergleichsweise einfach aufbauen läßt und welche darüberhinaus selbst unkompliziert ausgestaltet und leicht austauschbar sind.

Die Erfindung löst die gestellte Aufgabe durch die sich aus dem kennzeichnenden Teil des Anspruchs 1 ergebende Merkmalskombination. Die Erfindung besteht im Prinzip also darin von dem Gehäuse getrennte Rastmittel nach dem Zusammenbau des Gehäuses einzustecken und danach das Gehäuse mit der Aufnahme zu verrasten. Es ist aber auch denkbar, daß das Gehäuse zuerst in die Aufnahme eingeschoben und danach die Rastmittel (bei abgenommenem Betätigungshebel) in das Schaltergehäuse eingefügt und das Schaltergehäuse so mit der Aufnahme verrastet wird. Die Erfindung ist dann besonders vorteilhaft, wenn der Schalter einschließlich der in dem Schalterinnenraum verbauten Bauelemente kompliziert aufgebaut ist, so daß die Rastmittel unter Umständen eine anspruchsvolle Formgebung haben müssen, die sich nicht leicht zusammen mit dem Gehäuse einstückig gießen läßt. Weiterhin kann es vielfach von Vorteil sein, daß die Rastmittel beim Einbau der in den Schalter einzufügenden Bauelemente nicht störend im Wege stehen sondern erst später hinzugefügt werden.

Eine vergleichsweise einfache Ausgestaltung der erfindungsgemäßen Rastfeder ergibt sich durch die in Anspruch 2 aufgeführte Merkmalskombination. Danach weist die Rastfeder einen gekrümmten Abschnitt auf, der mit seinem ersten Abschnittsende in einen Rasthaken ausläuft, während sein anderes Abschnittsende ein Hebel zum Zurückziehen des Rasthakens aus der Rastöffnung in der Aufnahme bildet.

Auf diese Weise ist sichergestellt, daß durch das Ziehen an dem Hebelende des Abschnitts, dieser der gewünschten Bewegung weitgehend folgt und sich durch seine Steifigkeit nur geringfügig verbiegen kann. Die Schwenkbewegung wird vielmehr durch das zweite Rastmittelende gemäß den Merkmalskombinationen nach Anspruch 3 ermöglicht, die an dem steifen gekrümmten Abschnitt angreift und eine hinreichende Elastizität aufweist, um eine Schwenkbewegung des gekrümmten Abschnitts und damit eine Entriegelungsbewegung des Rasthakens zu ermöglichen. Das elastisch ausgebildete Rastmittelende ist lösbar in das Gehäuse des Schalters eingesteckt. Hierzu können entsprechend der Merkmalskombination nach Anspruch 4 entsprechende Öffnungen in dem Gehäuse vorgesehen sein, wobei das elastische Rastmittelende auch durch entsprechende Ausnehmungen in einer vor der Aufnahmeöffnung im Gehäuse liegenden Leiterplatte ragen kann.

Um das Rastmittel und insbesondere das zweite Ende dieses Rastmittels platzsparend im Schaltergehäuse unterzubringen, empfiehlt sich in Weiterbildung der Erfindung die Merkmalskombination nach Anspruch 5. Danach verläuft dieses Ende im wesentlichen senkrecht zur Frontplatte bzw. zu dem Armaturenbrett eines Kraftfahrzeuges und damit auch im wesentlichen parallel zur Gehäusefläche des einzurastenden Schalters. Allerdings ist darauf zu achten, daß für das Rastmittel ein hinreichender Bewegungsweg zum Lösen des Rasthakens aus der Aufnahmeöffnung in der Aufnahme zur Verfügung steht.

An sich ist es denkbar, daß die eingesteckten Rastmittel über spezielle Öffnungen in Löserichtung verschoben und danach der Schalter aus seiner Aufnahme herausziehbar ist. Um aber derartige spezielle Öffnungen zum Lösen des Schalters zu vermeiden, empfiehlt sich in Weiterbildung der Erfindung die Merkmalskombination nach Anspruch 6.

Danach hat man nach Ablösen des Betätigungshebels einen leichten Zugriff zu den Rastmitteln um sie in Löserichtung beispielsweise manuell verschwenken zu können.

Das zuletzt beschriebene Merkmal setzt in der Regel voraus, daß innerhalb des Betätigungshebels eine besondere Öffnung vorhanden sein muß, um den in den Schalter eingerasteten Hebel erst einmal abziehen zu können, da er regelmäßig mit einem zugehörigen Betätigungsglied verrastet ist. Um auch eine derartige Öffnung in dem Betätigungshebel zu vermeiden, empfiehlt sich in Weiterbildung der Erfindung die Merkmalskombination nach Anspruch 7. Danach besitzt der Drehhebel eine Rampe oder Schräge, die durch eine spezielle Bewegung des Betätigungsgliedes auf die Rastmittel einwirkt und somit ein Herausziehen des Schalters ermöglicht. Es versteht sich von selbst, daß die spezielle, zum Lösen des Schalters dienende Bewegung nicht versehentlich durch das Bedienungspersonal des Schalters erfolgen darf. Diese spezielle Bewegung ist somit nur durch besonderen Kraftaufwand bei Überwindung eines Anschlags oder durch einen nicht naheliegenden, nur dem Servicepersonal bekannten Bewegungsablauf zu erreichen.

Um dies sicherzustellen, kann auch so vorgegangen werden, daß erst der Schalter in der Aufnahme gelöst wird, wobei dieser um ein bestimmtes Stück aus der Aufnahme herausspringt. Nachdem diese Lösebewegung durchgeführt wurde, wird eine Öffnung in dem Betätigungshebel zugänglich, durch welche der Betätigungshebel abgelöst und danach der Schalter demontiert werden kann bzw. seine Bauelemente aus dem Gehäuse genommen und ausgetauscht werden können. Das Gehäuse kann dabei in der Aufnahme verbleiben. Soweit eine derartige Verfahrensweise erwünscht ist, empfiehlt sich in Weiterbildung der Erfindung die Anwendung der Merkmalskombination nach Anspruch 8. Demnach springt nach Lösen des Schalters dieser aus seiner Ausnehmung unter der Wirkung einer Federkraft heraus.

Es ist aber auch denkbar den Schalter in zwei Stufen zu demontieren, indem er anfangs gelöst wird und selbsttätig um einen bestimmten Löseweg hervortritt, wonach eine Demontageöffnung beispielsweise in dem Betätigungshebel zugänglich wird, über welche schließlich der Schalter vollkommen aus der Ausnehmung herausgenommen bzw. demontiert werden kann.

Bei einem unter Vorspannung in einer Aufnahme eingerasteten Schalter empfiehlt sich in Weiterbildung der Erfindung die Merkmalskombination nach Anspruch 9. Danach werden an das Gehäuse Federlaschen angegossen, welche beim Einbau des Schalters sich entgegen der Einbaurichtung vorspannen. Diese gespeicherte Kraft steht dann beim Lösen des Schalters zum Transport in Löserichtung zur Verfügung.

Die Erfindung ist gemäß der Merkmalskombination nach Anspruch 11 besonders geeignet für Drehschalter, da die Drehbewegung durch entsprechende Schrägen oder Rampen einfach zu einer Lösebewegung der Rastmittel umgesetzt werden kann. Es ist allerdings zu beachten, daß die spezielle Drehbewegung, die zum Lösen des Schalters führt nicht versehentlich durch die Bedienungsperson erfolgt. Hierzu ist eine vergleichsweise steile Rampe vorgesehen, die für die Bedienungsperson wie ein Anschlag für die Drehbewegung wirkt, während nur dem Reparaturpersonal bekannt ist, daß durch gewaltsames Weiterdrehen ein Lösen des Schalters erreicht werden kann. Um die beschriebenen Maßnahmen zu erreichen, empfiehlt sich in Weiterbildung der Erfindung die Merkmalskombination nach Anspruch 11.

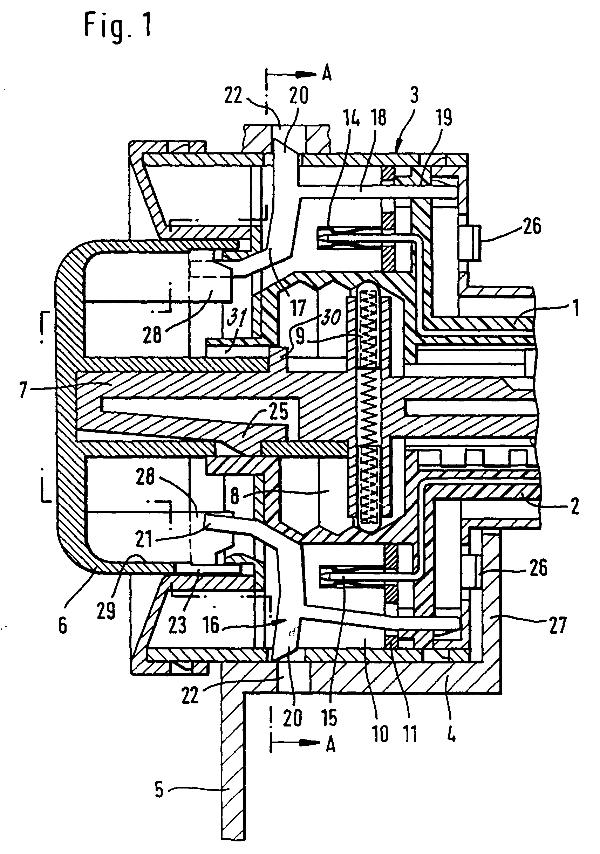

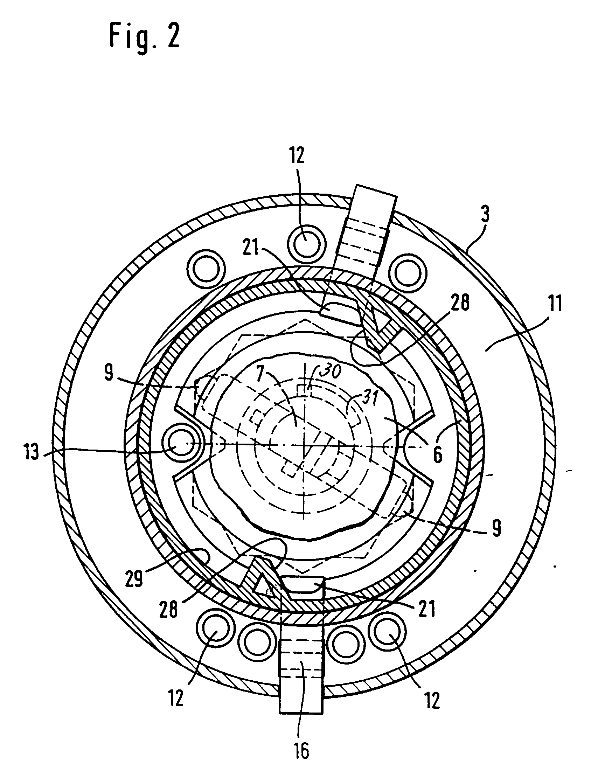

Ein Ausführungsbeispiel der Erfindung wird nachfolgend anhand von Fig. 1 und Fig. 2 beschrieben. Darin zeigt:
- Fig. 1: in skizzierter Form die Lage einzelner Bauelemente eines erfindungsgemäßen Schalters in einem angedeuteten Längsschnitt und
- Fig. 2: die Lage einzelner Bauelemente in einem skizzierten Querschnitt, der im wesentlichen längs der Linie A-A in Fig. 1 verläuft. Dabei sind nicht die längs der Schnittlinie tatsächlich sichtbaren Bauelemente wiedergegeben, sondern es soll der Eindruck der Lage der einzelnen Baugruppen zueinander vermittelt werden.

Fig. 1 zeigt ein erstes Gehäuseteil 1 und ein zweites Gehäuseteil 2, die miteinander verbunden einen Gehäusekörper bilden, welcher von einer Gehäusehülle 3 umschlossen ist. Die Gehäusehülle des Schalters ist in einer Aufnahme 4 (siehe Fig. 1, untere Hälfte) eingesetzt, die einen Teil eines Armaturenbrettes 5 bzw. einer Frontplatte für Instrumente bildet. Die Arbeitsweise des in Fig. 1 und 2 gezeigten Drehschalters ist nicht Gegenstand der vorliegenden Erfindung und soll daher nicht näher beschrieben werden. Für die Erfindung wichtig ist, daß ein Betätigungshebel 6 mit einer Drehwelle 7 verrastet ist, so daß die beiden zuletzt genannten Bauelemente sowohl in Drehrichtung als auch in Längsbewegungsrichtung gegeneinander fixiert sind. Durch die Drehbewegung der Drehwelle 7 werden in Abhängigkeit von der deren Winkelstellung und gegebenenfalls auch in deren Längsstellung bestimmte Kontakte geschlossen. Die Gehäusehülle 3 kann aus mehreren Hüllenteilen zusammengesetzt sein, beispielsweise durch Verrasten.

In Fig. 1 ist noch zu erkennen, daß die beiden Gehäuseteile 1 und 2 eine Rastkammer 8 formen, in welcher die Drehwelle, über vorgespannte Rastbolzen 9, in ihrer Drehwinkellage und Längslage einstellbar ist. In dem durch die Gehäusehülle 3 eingegrenzten Schalterraum 10 ist weiterhin noch eine im wesentlichen ringförmige Leiterplatte 11 eingefügt, welche Bauelemente, wie beispielsweise Beleuchtungskörper 12, 13 (Fig. 2) trägt, wobei die Beleuchtungskörper 12 Schaubilder oder Markierungen in der ortsfesten Gehäusehülle ausleuchten, während der Beleuchtungskörper 13 ein oder mehrere Symbole innerhalb des Bedienungshebels 6 beleuchtet. Hierzu kann in den Bedienungshebel 6 ein Lichtleiter eingespritzt sein oder der Bedienungshebel 6 selbst aus einem lichtleitenden Material mit geeigneter geometrischer Ausgestaltung gefertigt sein. Die Leuchtkörper 12 und 13 sind in Fig. 1 der Einfachheit halber weggelassen. Dort sind vielmehr Anschlußklemmen 14 gezeigt, welche mit Anschlußstiften 15 zusammenwirken, die vom nicht dargestellten Schalterende kommend die Leiterplatte mit Energie versorgen.

Für die Erfindung besonders wesentlich sind nun Rastmittel 16 in Form von Rastfedern. Diese Rastfedern bestehen hauptsächlich aus zwei Enden 17, 18, wobei das freie schwenkbare Ende durch einen im wesentlichen steifen, gekrümmten Abschnitt 17 und das elastische Rastmittelende 18 aus einem schmalen elastischen Stab gebildet ist. Das elastische Rastmittelende 18 ist mit dem steifen Rastmittelende 17 durch Vergießen einstückig bzw. einteilig verbunden. Das elastische Ende 18 ist in einer Halteöffnung 19 in jeweils einem der Gehäuseteile 1, 2 lösbar eingesetzt, kann mit diesem aber auch durch eine entsprechende Hinterschneidung verrastet sein. Wesentlich ist aber, daß das Rastmittel 16 erst nachträglich in das Gehäuse 1, 2, 3 einfügbar ist. Das erste steife Rastmittelende 17 ist gekrümmt, wobei das erste Abschnittsende 20 einen Rastvorsprung trägt, während das zweite Abschnittsende als zum Lösen der Verrastung dienendes Betätigungsmittel 21 vorgesehen ist. Für das Betätigungsmittel 21, welches durch das elastische erste Ende 18 schwenkbar angeordnet ist, weist das Gehäuse 1, 2, 3 zwei Anschlagflächen auf, welche den Schwenkweg des steifen ersten Endes 17 begrenzen. Im spannungslosen Zustand nimmt das Rastmittel 16 eine in Fig. 1 oben gezeigte Lage ein, in der der Rastvorsprung 20 in eine Rastöffnung 22 der Aufnahme 4 ragt. Durch eine entsprechende Schräge des Rastvorsprungs 20 ist es damit möglich, bei eingesetztem Rastmittel 16 das Gehäuse 1, 2, 3 in die Aufnahme einzuschieben und zu verrasten. Der erfindungsgemäße Schalter kann dann durch die Bedienungsperson durch Drehen um bestimmte Drehwinkel oder Herausziehen um bestimmte Wegstrecken des Betätigungshebels 6 bedient werden. Ein Einrasten des Gehäuses ist auch durch Einfügen der Rastmittel 16 bei in die Aufnahme 4 eingesetztem Gehäuse möglich, wobei aber der Betätigungshebel abgenommen sein muß.

Soll nun der Schalter ausgebaut werden, so ist es theoretisch möglich, daß man den Betätigungshebel 6 von der Drehwelle 7 abzieht und dann die so zugänglich gewordenen Betätigungsmittel 20 gegeneinander zu dem vorgesehenen Anschlag verschwenkt, so daß die Rastvorsprünge 20 aus den Rastöffnungen 22 herausgezogen werden. Die Gehäusehülle 3 kann dann samt Schalter mittels der Drehwelle 7 aus der Aufnahme 4 gezogen werden. In dieser Lage ist es möglich, auch die Rastmittel 16 aus dem Schalterraum 10 herauszuheben (ggf. unter vorheriger Zerlegung der verrasteten Gehäusehülle 3). Als nächstes läßt sich dann die Leiterplatte 11 herausheben und ggf. auswechseln. Weiter oben war schon erwähnt worden, daß die Anschlußklemmen 14 nur auf die Anschlußstifte 15 aufgesteckt sind, so daß ein Lösen der Leiterplatte keine Schwierigkeiten bereitet.

Für die Erfindung ist es nun sehr vorteilhaft, daß die Federlappen 26 sich an dem Boden 27 der Aufnahme 4 unter Federkraft während des eingerasteten Zustands des Schalters abstützen. Wird nun die Verrastung durch Verschwenken der Betätigungsmittel 21 beendet, so springt der Schalter aus der Aufnahme heraus. Es ist besonders wichtig für die Fälle, in denen der Schalter anders nicht heraushebbar ist. Mit Hilfe der Vorspannung über die Federlappen 26 läßt sich weiterhin erreichen, daß beim Lösen der Rastmittel 16 die Gehäusehülle 3 so weit selbsttätig herausgeschoben wird, daß die Zugangsöffnung 23 für das Reparaturpersonal zugänglich ist. Es läßt sich somit der Schalter auseinandernehmen, während er sich noch im wesentlichen in der Aufnahme 4 befindet und aus dieser nur ein durch die Federlappen 27 vorgegebenes Stück herausbefördert wurde.

Die oben angegebenen Maßnahmen sind besonders empfehlenswert, wenn sich die Rastmittel 16 auf aufgesetztem Betätigungshebel lösen lassen.Mit Hilfe der Erfindung ist es zusätzlich möglich, die Betätigungsmittel durch eine gesonderte Drehbewegung des Betätigungshebels 6 zu lösen. Hierzu dienen Rampen oder Schrägen 28, welche an den Betätigungsmitteln 21 eingreifen. Die Rampen 28 sind mit der Innenwand 29 des Betätigungshebels 6 einstückig verbunden, beispielsweise angegossen. Die aus Fig. 2 erkennbare Neigung der Schräge bzw. Rampe 28 ist so gewählt, daß sie nur durch einen erheblichen Kraftaufwand durch Drehen des Betätigungshebels 6 zu einem Verschwenken des Betätigungsmittels 21 führt. Dieser Kraftaufwand stellt sich für die Bedienungsperson üblicherweise als Anschlag dar, während das Reparaturpersonal darüber informiert ist, daß man durch ein gewaltsames Weiterdrehen in der geeigneten Richtung die Betätigungsmittel bewegen und damit über die Federlappen 26 der Gehäusehülle 3 den Schalter einen geeigneten Weg aus der Aufnahme 4 fördern kann.

Eine Möglichkeit zum Schutz durch versehentliches Demontieren, ist die Anbringung eines Stifts 30 an der drehbaren Achse. In der gezeichneten Stellung läßt sich die Achse nur in Demontagerichtung weiterdrehen, wenn der Drehknopf gedrückt wird, der Stift aus dem Anschlagbereich kommt, und der Knopf somit "weiterdrehbar" wird.
Der Schalter kann mit dem Betätigungshebel 6 so komplett aus der Aufnahme 4 gezogen werden und ausgetauscht, ggf. demontiert werden.

Der Stift 30 an der Drehwelle 7 ist an einer ringsektorförmigen Ausnehmung in Verbindung mit dem Betätigungshebel 6 soweit drehbar, bis der Stift gegen in Fig. 1 nicht dargestellte Seitenwände der Ausnehmung 31 läuft, welcher als Anschläge von dem kreissektorfömigen Weg des Stiftes 30 begrenzen. Will man nun den Schalter demontieren und den Betätigungshebel 6 über den Anschlag hinaus drehen, so muß der Anschlag durch den Stift 30 umgangen werden, was durch Eindrücken des Betätigungshebels 6 in Verbindung mit der Drehwelle 7 geschieht. Drückt man den Betätigungshebel 6 in Richtung des Schalterinneren, so geht das um eine kurze Wegstrecke entgegen der Kraft der Rastbolzen 9, welcher durch die entsprechende Schräge in der Rastkammer zueinander verschoben werden. Wenn dann schließlich die Führungen für die Rastbolzen 9 in der Drehwelle 7 am Boden der Rastkammer 8 anschlagen, so ist auch der Stift 30 zur Gänze in die Rastkammer 8 eingetaucht und damit außer Eingriff mit der ringförmigen Ausnehmung 31. Infolge dessen entfällt auch die Wirkung der Anschläge der Ausnehmung 31, so daß sich der Betätigungshebel 6 um den gewünschten zusätzlichen Winkel drehen läßt, welcher zum Verschwenken der Rastmittel 16 notwendig ist. In dieser Lage kann auch die Zugangsöffnung 23 zugänglich sein, so daß in dieser Stellung auch der Betätigungshebel 6 von der Drehwelle 7 gelöst werden kann, wie weiter oben schon beschrieben. Für den Ausbau des Schalters ist dies allerdings nicht notwendig, da dieser nun komplett mit Gehäusehülle aus der Aufnahme 4 gezogen werden kann.

## Patentansprüche

1. In einer Aufnahme (4) insbesondere Armaturenbrett (5) eines Kraftfahrzeuges einsetzbarer elektrischer Schalter, bei dem den Schalter in der Aufnahme (4) haltende Rastmittel (16) durch das Schaltergehäuse (1, 2, 3) mit ihrem freien ersten Ende (17) bis in den Bereich eines abnehmbaren Betätigungshebels (6) reichen und mit ihrem dem freien Ende abgewandten zweiten Ende (18) in dem Schalter gehalten sind, dadurch **gekennzeichnet,** daß die Rastmittel (16) durch zumindest eine in das Schaltergehäuse (1, 2, 3) einsteckbare Rastfeder (16) gebildet sind.

2. Schalter nach Anspruch 1, dadurch **gekennzeichnet,** daß die Rastfeder (16) an ihrem freien ersten Ende (17) mit einem im wesentlichen steifen, gekrümmten Abschnitt (17) versehen ist, dessen erstes Abschnittsende (20) einen mit der Aufnahme (4) verrastbaren Rastvorsprung trägt und dessen zweites Abschnittsende (21) zum Lösen der Verrastung dienende Betätigungsmittel aufweist.

3. Schalter nach Anspruch 2, dadurch **gekennzeichnet,** daß das zweite elastisch ausgebildete Rastmittelende (18) an der einen Seite mit dem gekrümmten Abschnitt (17) einstückig verbunden und mit der zweiten Seite lösbar in dem Schaltergehäuse (19) gehalten ist.

4. Schalter nach Anspruch 3, dadurch **gekennzeichnet,** daß die zweite Seite in eine Halteöffnung (19) des Gehäuses (1, 2) eingesteckt ist und vorzugsweise durch eine Öffnung in einer in das Schaltergehäuse eingefügten Leiterplatte (11) ragt.

5. Schalter nach einem der Ansprüche 2 bis 4, dadurch **gekennzeichnet**, daß das zweite Rastmittelende (18) im wesentlichen senkrecht zur Oberfläche des Armaturenbretts (5) verläuft und sich in dieser Richtung an einer Schalterwand (3) abstützt.

6. Schalter nach einem der vorangegangenen Ansprüche, dadurch **gekennzeichnet**, daß der Betätigungshebel (6) von einem Betätigungsglied (7) des Schalters (1, 2, 3) abziehbar und dieser durch Verschwenken des dann zugänglichen freien Rastmittelendes (21) gegebenenfalls manuell lösbar ist.

7. Schalter nach einem der vorangegangenen Ansprüche, dadurch **gekennzeichnet**, daß der Betätigungshebel (6) mit einer Schräge (28) versehen ist, die mittels einer außerhalb der Umschaltbewegung des Betätigungshebels (6) liegenden Lösebewegung des Betätigungshebels auf das freie Rastmittelende (17) einwirkt und so das Schaltergehäuse (1, 2, 3) aus der Aufnahme (4) ausrastet.

8. Schalter nach einem der vorangegangenen Ansprüche, dadurch **gekennzeichnet**, daß das Schaltergehäuse (1, 2, 3) in dessen Löserichtung durch die Wirkung einer Federkraft (26) vorgespannt ist und nach dem Ausrasten das Schaltergehäuse (1, 2, 3) aus der Aufnahme (4) um einen Löseweg aus der Aufnahme (4) herausgeschoben wird.

9. Schalter nach einem der vorangegangenen Ansprüche, dadurch **gekennzeichnet**, daß die Federkraft durch mindestens einen Federlappen (26) zur Verfügung gestellt wird, der an der Aufnahme (4) oder vorzugsweise am Schaltergehäuse befestigt ist und sich am Schaltergehäuse (3) bzw. an der Aufnahme (4) abstützt.

10. Schalter nach einem der vorangegangenen Ansprüche, dadurch **gekennzeichnet**, daß nach dem Zurücklegen des Löseweges der Betätigungshebel (6) eine Zugangsöffnung (23) freigibt, durch welche mittels eines Werkzeugs der Betätigungshebel (6) aus dem Schalter (1, 2, 3,) herauslösbar ist.

11. Schalter nach Anspruch 7, dadurch **gekennzeichnet**, daß er ein Drehschalter ist und die Kontur der Schräge (28) gegenüber dem Radius des als Drehknopf (6) ausgestalteten Drehhebels etwa 45° geneigt ist.

12. Schalter nach einem der vorangegangenen Ansprüche, dadurch **gekennzeichnet**, daß das Betätigungsglied (7) in das Schaltergehäuse (1,2,3) elastisch eindrückbar ist, wobei durch den so zurückgelegten Weg ein Begrenzungsanschlag (30,31) umgangen wird, und so der Weg für eine zusätzliche Drehbewegung des mit dem Betätigungshebel (6) verbundenen Betätigungshebels (7) freigegeben wird, welcher zum Lösen der Rastmittel (16) dient.

## Claims

1. Electrical switch which can be inserted into a receptacle (4), in particular a dashboard (5) of a motor vehicle, and in which latching means (16) holding the switch in the receptacle (4) extend through the switch housing (1, 2, 3) by means of their free first end (17) into the region of a removable actuating lever (6) and are held in the switch by means of their second end (18) remote from the free end, characterized in that the latching means (16) are formed by at least one latching spring (16) which can be inserted into the switch housing (1, 2, 3).

2. Switch according to Claim 1, characterized in that the latching spring (16) is provided at its free first end (17) with a substantially stiff, curved section (17) whose first section end (20) carries a latching projection which can be latched to the receptacle (4) and whose second section end (21) has actuating means which serve to release the latching.

3. Switch according to Claim 2, characterized in that the second elastically formed latching-means end (18) is joined integrally on one side to the curved section (17) and is held releasably in the switch housing (19) with the second side.

4. Switch according to Claim 3, characterized in that the second side is inserted into a holding opening (19) of the housing (1, 2) and preferably projects through an opening in a printed circuit board (11) inserted in the switch housing.

5. Switch according to one of Claims 2 to 4, characterized in that the second latching-means end (18) extends substantially perpendicularly to the surface of the dashboard (5) and bears against a switch wall (3) in this direction.

6. Switch according to one of the preceding claims, characterized in that the actuating lever (6) can be pulled off an actuating member (7) of the switch (1, 2, 3) and said switch can be released, possibly manually, by swivelling the free latching-means end (21) which is then accessible.

7. Switch according to one of the preceding claims, characterized in that the actuating lever (6) is provided with a bevel (28) which acts on the free latching-means end (17) by means of a releasing movement of the actuating lever, which releasing movement is situated outside the switching movement of the actuating lever (6), and thus unlatches the switch housing (1, 2, 3) from the receptacle (4).

8. Switch according to one of the preceding claims, characterized in that the switch housing (1, 2, 3) is pretensioned in its released direction by the action of a spring force (26) and, after being unlatched, the switch housing (1, 2, 3) is pushed out of the receptacle (4) over a release path.

9. Switch according to one of the preceding claims, characterized in that the spring force is provided by at least one spring tongue (26) which is attached to the receptacle (4) or, preferably, to the switch housing and bears against the switch housing (3) or against the receptacle (4), respectively.

10. Switch according to one of the preceding claims, characterized in that, after traversing the release path, the actuating lever (6) frees an access opening (23) through which the actuating lever (6) can be removed from the switch (1, 2, 3) by means of a tool.

11. Switch according to Claim 7, characterized in that it is a rotary switch and the contour of the bevel (28) is inclined by about 45° with respect to the radius of the rotary lever configured as rotary knob (6).

12. Switch according to one of the preceding claims, characterized in that the actuating member (7) can be elastically pressed into the switch housing (1, 2, 3), and in this process a limiting stop (30, 31) is circumvented by the path traversed and the path is cleared for an additional rotary movement of the actuating member (7) which is joined to the actuating lever (6), which path serves to release the latching means (16).

## Revendications

1. Commutateur électrique pouvant être encastré dans un logement (4), en particulier dans un tableau de bord (5) d'un véhicule automobile, dans lequel des moyens d'encliquetage (16) qui maintiennent le commutateur dans le logement (4) se prolongent, à travers le boîtier (1, 2, 3) du commutateur, et par leur première extrémité libre (17) jusque dans la région d'un levier de commande amovible (6), et sont maintenus à l'intérieur du commutateur par leur deuxième extrémité (18) qui est éloignée de l'extrémité libre, caractérisé en ce que les moyens d'encliquetage (16) sont formés par au moins un ressort d'encliquetage (16) pouvant être inséré dans le boîtier (1, 2, 3) du commutateur.

2. Commutateur selon la revendication 1, caractérisé en ce que le ressort d'encliquetage (16) est muni, à sa première extrémité libre (17), d'un segment courbe (17) pratiquement rigide, dont la première extrémité de segment (20) porte une saillie d'encliquetage qui peut être encliquetée avec le logement (4) et dont la deuxième extrémité de segment (21) présente des moyens d'actionnement qui servent pour libérer l'encliquetage.

3. Commutateur selon la revendication 2, caractérisé en ce que la deuxième extrémité (18) du moyen d'encliquetage, qui est de constitution élastique, est reliée en une seule pièce, d'un côté, au segment courbe (17), tandis que, par le deuxième côté, elle est maintenue de façon amovible dans le boîtier (19) du commutateur.

4. Commutateur selon la revendication 3, caractérisé en ce que le deuxième côté est inséré dans une ouverture de retenue (19) du boîtier (1, 2) et traverse de préférence une ouverture ménagée dans un circuit imprimé (11) monté dans le boîtier du commutateur.

5. Commutateur selon une des revendications 2 à 4, caractérisé en ce que la deuxième extrémité (18) du moyen d'encliquetage s'étend pratiquement perpendiculairement à la surface du tableau de bord (5) et s'appuie, dans cette direction, contre une paroi (3) du commutateur.

6. Commutateur selon une des revendications précédentes, caractérisé en ce que le levier de commande (6) peut être détaché d'un organe de commande (7) du commutateur (1, 2, 3) et que ce dernier peut être séparé, éventuellement manuellement, en faisant pivoter l'extrémité libre (21) du moyen d'encliquetage, qui est maintenant accessible.

7. Commutateur selon une des revendications précédentes, caractérisé en ce que le levier de commande (6) est muni d'un plan incliné (28) qui agit sur l'extrémité libre (17) du moyen d'encliquetage, sous l'effet d'un mouvement de séparation du levier de commande, qui se trouve en dehors du mouvement de commutation du levier de commande (6), et libère ainsi le boîtier (1, 2, 3) de son encliquetage dans le logement (4).

8. Commutateur selon une des revendications précédentes, caractérisé en ce que le boîtier (1, 2, 3) du commutateur est précontraint dans le sens de sa libération, par l'action d'une force élastique (26), et, lorsque le boîtier (1, 2, 3) du commutateur a été dégagé de son encliquetage dans le boîtier (1, 2, 3) du commutateur, il est éjecté du logement (4) sur une distance de séparation.

9. Commutateur selon une des revendications précédentes, caractérisé en ce que la force élastique est développée par au moins une languette élastique (26) qui est fixée au logement (4) ou, de préférence, au boîtier du commutateur et qui prend appui contre le boîtier (3) du commutateur ou contre le logement (4).

10. Commutateur selon une des revendications précédentes, caractérisé en ce qu'après le parcours de la distance de séparation, le levier de commande (6) dégage une ouverture d'accès (23) à travers laquelle le levier de commande (6) peut être dégagé du commutateur (1, 2, 3) au moyen d'un outil.

11. Commutateur selon la revendication 7, caractérisé en ce qu'il est un commutateur tournant et que le profil du plan incliné (28) est incliné d'environ 45° par rapport au rayon du levier tournant constitué par un bouton tournant (6).

12. Commutateur selon une des revendications précédentes, caractérisé en ce que le levier de commande (7) peut être enfoncé élastiquement dans le boîtier (1, 2, 3) du commutateur cependant que, sous l'effet de la distance qu'il a ainsi parcourue, une butée de limitation (30, 31) est ainsi contoumée et que, de cette façon, la distance pour un mouvement de rotation additionnel du levier de commande (7) solidaire du levier de commande (6) est libérée, ce mouvement servant à dégager les moyens d'encliquetage (16).
